# NEW EUROPEAN PATENT SPECIFICATION

(11) **EP 0 332 235 B2**
(45) Date of publication and mention of the opposition decision: **30.12.1998**
(45) Mention of the grant of the patent: 23.12.1992
(21) Application number: 89108565.6
(22) Date of filing: 27.06.1986
(51) Int. Cl.: A01J 7/00, A01J 5/08, A01K 13/00, A01J 7/04

(54) **An implement for automatically milking animals**
Gerät zum automatischen Melken von Tieren
Dispositif de traite automatique d'animaux

(30) Priority: 01.07.1985 NL 8501884
(43) Date of publication of application: 13.09.1989
(62) Divisional of application: 86201137.6
(73) Proprietor: C. van der Lely N.V., 3155 PD Maasland (NL)
(72) Inventor: van der Lely, Cornelis, Zug (CH)
(74) Representative: Corten, Maurice Jean F.M.

(56) References cited:
- DE-A- 2 622 794
- GB-A- 918 766
- GB-A- 2 007 486
- US-A- 2 952 860
- US-A- 4 010 714
- DE TELEGRAAF 04 December 1984, page T23 EEF BOS: "LAND- EN TUINBOUW"

## Description

The invention concerns an implement according to the preamble of claim 1.

An implement as described in the opening paragraph is known from GB-A-2 007 486. In this implement a milking unit comprising a teat cup is positioned under an animal's udder by means of an electronically controlled milking unit support, whereafter the milking unit is moved in a substantially vertical direction to connect the teat cup to a teat of the animal's udder.

With such an implement, and during use thereof, it is of importance that the necessary hygiene is ensured. The cleaning of the teats of the udder, prior to the commencement of the milking operation, may benefit the said hygiene.

In this application, by "cleaning" is understood both washing, rinsing and disinfecting, which cleaning may be effected both by means of a cleaning liquid (e.g. water) and by means of a spraying substance.

The invention contemplates an implement for milking animals, by means of which it is possible to both clean the teats and connect the teat cups in an effective manner.

In accordance with the invention, to this end the implement is characterized by the features of the characterizing part of claim 1. With the positioning of the milking unit relative to the teat also the cleaning means is brought into the desired position. In this manner, an effective cleaning may take place, because it may be restricted to that area of the udder or teat which is eligible therefor. In addition, a saving of time may be obtained, since the milking unit and the cleaning means are simultaneously brought to the desired position and may be simultaneously connected to the relevant teat of the udder. Preferably, a cleaning liquid or air may flow through a milking tube, a cleaning tube and an inner part of the milking unit around a teat.

In GB-B-918 766 a milking unit with four teat cups for connection to an animal's udder by means of straps is described, wherein a cleaning liquid flows through a cleaning tube, through a special cleaning device at the upper end and through a milking tube. The cleaning device is rather complicated and introduces the cleaning liquid in an indirect manner via a toroidal chamber in the inner part of the milking unit. According to an embodiment, the cleaning liquid or air may be supplied through the relevant tube into said inner part of the milking unit. In a specific embodiment, the cleaning liquid or air may be supplied to the inner part of the milking unit through the milk tube debouching into a lower part of the milking unit, while said liquid or air may be discharged from said inner part through the cleaning tube debouching into an upper part of the milking unit.

Furthermore, in accordance with the invention, the milking unit comprises a cleaning device in the form of a tubular part surrounding a teat and through which the cleaning liquid flows.

In accordance with a further feature of the invention, in order to faciliate connecting the teat cup together with cleaning device, the cleaning device may comprise a flexible, conical catching device for the teat, whereby the funnel shape of the catching device can be conducive to a correct positioning of the cleaning device relative to the teat and, by connection to the udder, can at the same time establish a sealing around the teat.

In accordance with a still further feature of the invention, the cleaning device may comprise a rotatable brush. Preferably, the brush is positioned substantially symmetrically around the centre line of a relevant teat cup. In accordance with the invention, the brush may be of an annular design having inwardly directed hairs, it being possible for the brush to be positioned around a teat, so that the hairs are directed towards the teat. By "annular" is meant here also "tubular".

In accordance with a still further feature of the invention, the brush may include a bearing at its outer circumference, so that a rotation about the axis of symmetry of the annular body can be performed without support in the central portion. For this purpose, the brush may be driven by means of an electric motor. Moreover, the hairs of the brush are directed substantially towards the centre line of the brush, but do not reach as far as said centre line, so that the central portion of the brush is hollow.

Furthermore, it will be noticed that several milking units may be mounted on a support, at least one milking unit being movable and fixable in a horizontal plane relative to an other milking unit, so that the milking units can be brought into a desired position corresponding to the position of the relevant animal's teats. If the implement is in its rest position, the milking units are located under the milking parlour floor, while the support for the milking units is swivable about a substantially horizontal shaft from its rest position to an operative position. Such an isolated location for the milking units in the rest position is also of importance in order to prevent damage and contamination.

For a better understanding of the invention and to show how the same may be carried into effect, reference will now be made, by way of example, to the accompanying drawings, in which:
Figure 1 is a view of an animal in the milking parlour, the milking machine being connected,
Figure 2 is a schematic cross-section of a milking unit on the line II - II in Figure 4,
Figure 3 is a schematic view of a connected milking machine,
Figure 4 is a cross-section on the line IV - IV in Figure 3,
Figure 5 is a schematic rear view of the implement, and
Figures 6, 7 and 8 are schematic views of the various positions of the milking machine.

In the various drawings, corresponding parts have been indicated by the same reference numerals.

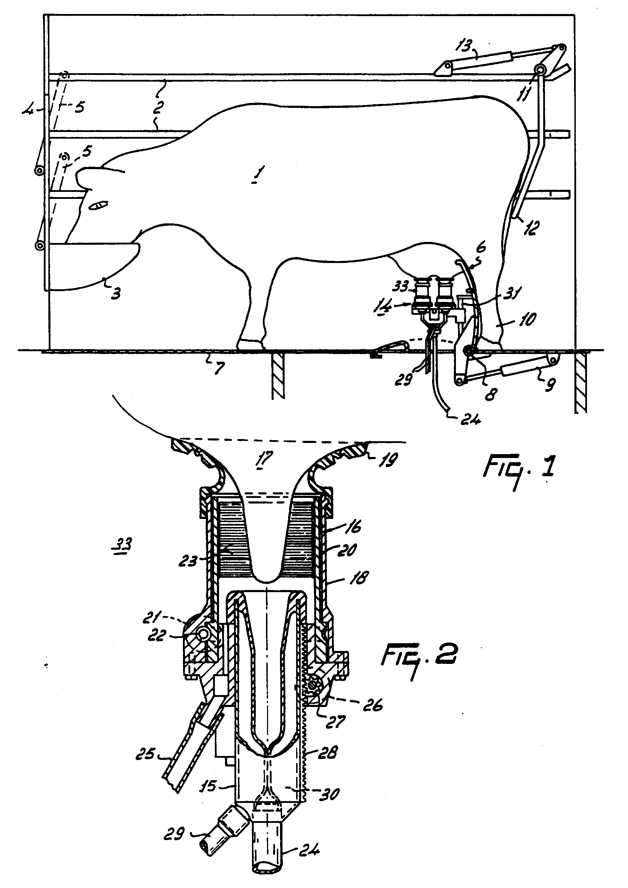

Figure 1 shows an animal 1, in this case a cow, located in a milking parlour. The animal 1 is located between lateral partitions constituted by a tubular frame 2 and is allowed to eat from a manger 3 attached to an exit door 4. The exit door 4 is adapted to swivel upwardly by means of swivel arms 5 when the animal leaves the milking parlour. A swivable flap 6, which is adapted to swivel about a pivot shaft 8 arranged at the level of the milking parlour floor 7, is shown in upwardly directed position. The swivelling movement of flap 6 about pivot shaft 8 is effected by means of a hydraulic or pneumatic cylinder unit 9. The pivot shaft 8 is situated exactly in front of the cow's hindlegs 10. By means of a bracket 12 swivable about a pivot shaft 11 the cow is kept in the position in which the hindlegs stand near the pivot shaft 8, at least the cow being prevented from moving rearwardly. The bracket 12 is swivelled by means of a hydraulic or pneumatic cylinder unit 13.

The milking machine 14, which is mounted slidably on flap 6, is shown in Figure 1 in the position connected to the udder. As is apparent from the Figure, the flap 6 constitutes a protection of the milking machine against damage or contamination from the rear side, that is to say the side where the hindlegs 10 of the animal are situated.

Figure 2 schematically shows a milking unit 33 including a teat cup 15 and a cleaning device 16 which is connected to the schematically shown teat 17 of an animal. The unit shown comprises a stationary part 18 to which is arranged a flexible, funnel-shaped part 19, which constitutes the catching device for the teat 17. The funnel-shaped part 19 also constitutes a cover against the animal's udder. Inside the stationary part 18 there is located an annular part, in this case a tubular part 20, which is adapted to rotate about its longitudinal axis therein and which is driven by a schematically shown electric motor 21, e.g. by means of a worm wheel 22. At its inside, the tubular part 20 comprises hairs 23 constituting an inwardly directed brush. As a result of the rotation of the tubular part 20, the hairs 23 move over the teat, thus cleaning and massaging same. During cleaning, water or other liquid can be supplied through the milk tube 24 and be discharged through line 25. It is also possible to supply through tube 24 heated or non-heated air in order to dry the teat 17 and, if necessary, parts of the milking machine.

The stationary part 18 also comprises an electric motor 26 which includes a pinion 27 co-operating with a rack 28 connected to the teat cup 15. By means of the electric motor 26 it is possible to move the teat cup 15 in the vertical direction towards the teat 17 in order to allow of the milking operation.

The milking unit 33 comprises a milk tube 24 which, during milking, discharges the milk. Furthermore, there is present a pulsating tube 29, through which in otherwise known manner an alternating pressure can be effected in the teat holder 30.

By means of a support arranged at the stationary part 18, the implement shown in Figure 2 can be brought into a position under the teat 17, after which it is connected thereto by means of an upwardly directed movement. In order to clean the teat 17, the tubular part 20 is subsequently rotated for some time, during which cleaning liquid is supplied through milk tube 24 and discharged through cleaning tube 25. After a predetermined period of time, the supply of cleaning liquid is stopped and pre-heated air is supplied through the milk tube 24 and, after a sufficient drying has been effected, the teat cup 15 is raised and the milking operation can be started.

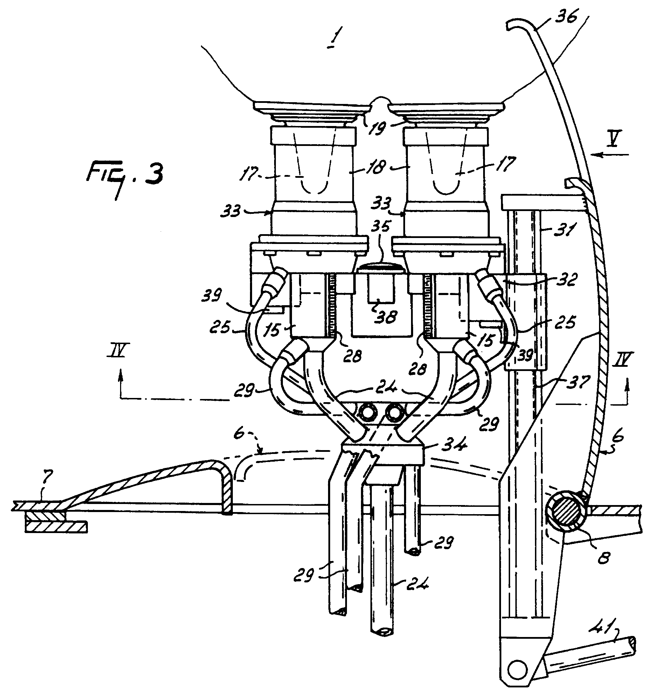

Figure 3 is a side view showing two milking units according to Figure 2. Figure 3 corresponds to part of Figure 1. In Figure 3 is shown part of the milking parlour floor 7, the flap 6 being swivelled about pivot shaft 8 in a substantially vertical position. To the flap 6 is mounted a guide rod 31, along which a support 32 is slidable by means of an, otherwise not shown, electric motor or in any other way, such as hydraulically or pneumatically. The support 32 is connected with the stationary part 18 of the two milking units 33 shown. The various conduits of the milking units are joined in the milking claw 34 and subsequently extend to an other part of the milking machine.

The support 32 furthermore comprises an electronic camera 35 for observing the teats, on account of which observation the milking units 33 are brought into a position relative to the support 32 suitable with regard to the animal. In addition, the support comprises a sensor 38, e.g. an ultrasonic transmitter and receiver, by means of which the distance to the udder can be determined and by means of which the height of the implement can be adjusted.

It will be obvious that in Figure 3 the milking units 33 are shown in the cleaning position, that is to say that the teat cup 15 is situated in the downwardly pushed position relative to the stationary part 18.

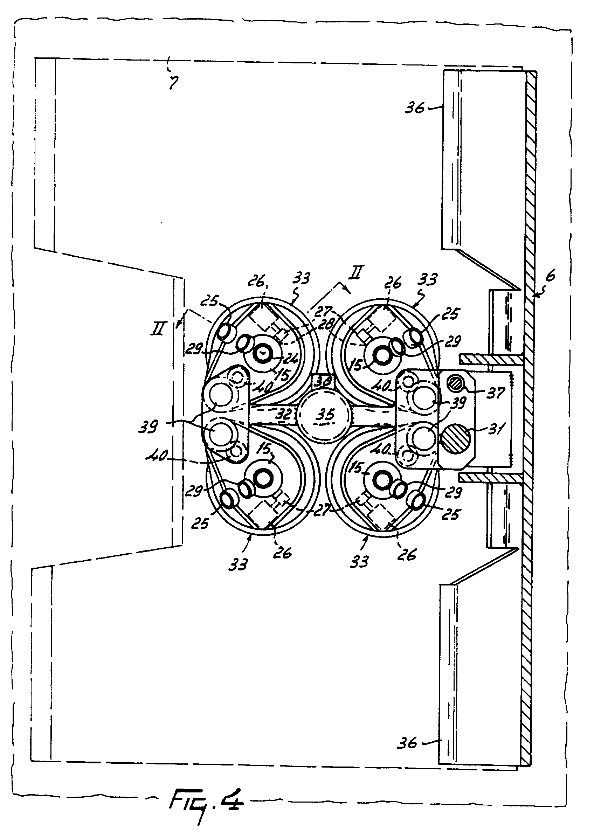

Figure 4 is a schematic bottom view of the implement shown in Figure 3, the cross-section shown in Figure 2 being indicated by the arrows II - II. Figure 4 shows the flap 6, it being indicated that the two side portions 36 extend higher than the central portion thereof, so that, during swivelling of the flap 6 about the pivot shaft 8, the animal's udder is not touched. To the flap 6 is mounted the guide rod 31 and furthermore there is shown the screw spindle 37, by means of which the support 32 can be adjusted in height. On the support is shown the electronic camera 35 and the ultrasonic sensor 38.

The four milking units 33 shown are each pivotably mounted about a shaft 39 on a support 32. The angular rotation of each milking unit relative to the pivot shaft 39 can be adjusted by means of schematically shown electric motors 40, so that each milking unit can be fixed in a position suitable for the relevant animal.

In addition, in Figure 4 there are shown electric motors 26 which by means of pinions 27 and racks 28 can slide the teat cups 15 in height relative to the cleaning device. Also, with each of the four milking units there are shown the various tubes, i.e. the milk tube 24 for supplying cleaning liquid and air and for discharging milk, the cleaning tube 25 for discharging cleaning liquid, and the pulsating tube 29 for supplying an alternating pressure to the teat holder.

By means of dash lines is indicated schematically the opening in the milking parlour floor 7, which opening has a shape which substantially corresponds to that of the flap 6.

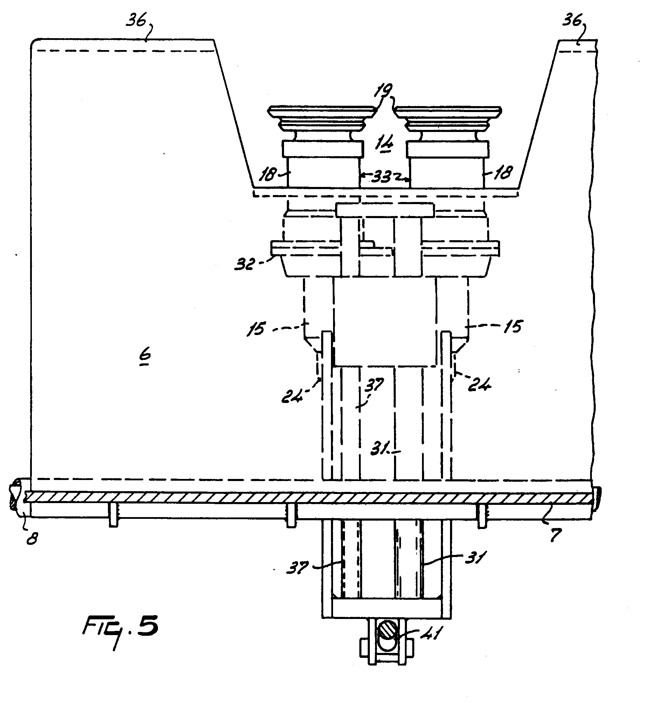

Figure 5 schematically shows a view corresponding to arrow V in Figure 3, from the rear towards the flap 6, in which view the higher extending side portions 36 have been clearly indicated. Behind the flap 6 there is situated the part of the milking machine to be connected to the animal's udder, two milking units 33 being visible, each of which having the flexible, funnel-shaped catching device 19. The two milking units 33 are connected with the support 32 indicated by dash lines, which support is connected slideably in height with the flap 6, as has been described previously. The flap 6 is pivotable about the shaft 8, for which purpose there is present a hydraulic cylinder, the piston rod 41 of which is indicated at the bottom in Figure 5.

Figures 6, 7, 8 and 9 show the various stages of the procedure to be performed by means of the implement for milking according to the invention.

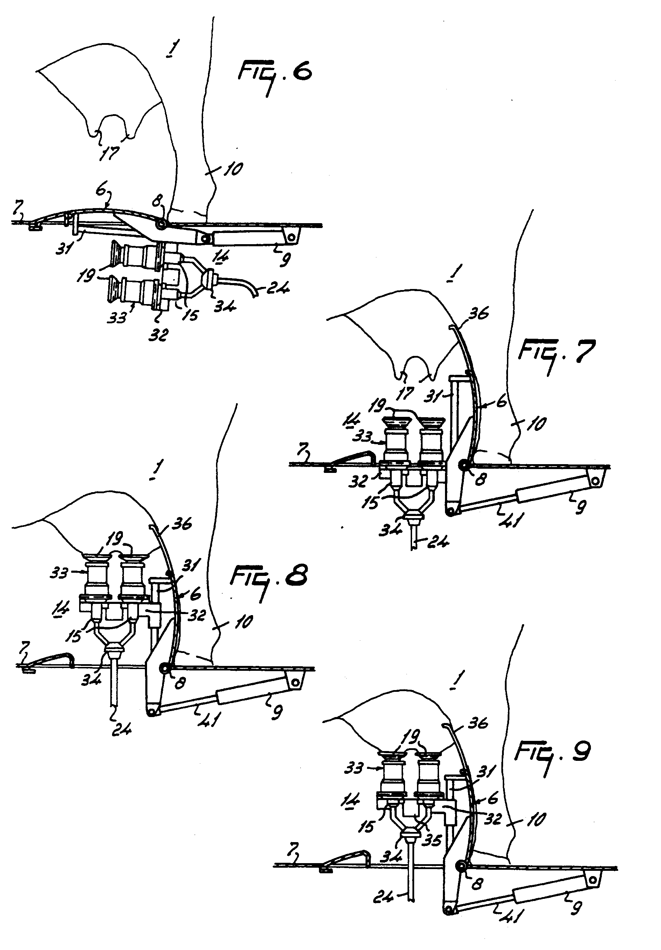

Figure 6 shows part of the milking parlour floor 7, the flap 6 being swivelled downwardly and thus constituting part thereof. After the animal, in this case a cow, has entered the milking parlour, her hindlegs will be situated near the pivot point 8 of the flap 6. If the hindlegs 10 are situated too far forwardly, they will be moved to the rear when the flap 6 is brought in the vertical position, as is shown in Figure 7. If the hindlegs 10 are situated too far rearwardly, the animal will be pushed forwardly by means of the bracket 12 shown in Figure 1 until the correct position of the hindlegs is attained. To that end there may be present in the milking parlour floor 7 sensors for detecting the position of the hindlegs 10.

As is apparent from Figure 6, the part of the milking machine to be connected to the animal's udder is located in its inoperative position under the floor, so that on the one hand no space is occupied thereby in the milking parlour or stable, while on the other by the accommodation thereof in a separate room the necessary hygiene can be maintained.

Once the animal has entered the milking parlour, the flap 6 is brought in the upward position by means of the hydraulic cylinder 9, as a result of which an opening is created in the milking parlour floor, through which opening the part 14 of the milking machine to be connected to the animal's udder can be moved upwardly (Figure 7).

After the various milking units 33, in a manner as described previously, have been brought into the position relative to the support 32 suitable with regard to the relevant animal, said support 32 is moved further upwardly along the guide rod 31 until the teats 17 of the udder are enveloped and the funnel-shaped part 19 is contiguous to the udder. The teat cups 15 are then still in the downward position, as also indicated in Figure 2, so that the cleaning device may clean, disinfect, dry and/or massage the animal's teats, in so far as this is desired. This situation is shown in Figure 8.

In a manner as described previously, the teat cups 15 are subsequently moved upwardly, so that the milking operation can be started, which is shown in Figure 9.

After the milking operation has been completed, which can be detected e.g. by means of a fluid flow meter arranged somewhere in the milk tube, the support is moved downwardly again along the guide rod 31, so that, by means of the hydraulic cylinder 9, the flap 6 can be swivelled to the substantially horizontal position, after which the animal can leave the milking parlour.

The control of the implement may be effected by means of a computer, while hydraulic, pneumatic or electric means may be provided for moving the various parts thereof. The metering of fodder during milking may also be controlled by a computer, for which purpose the animals may be provided with an identification system, e.g. a transmitter on a collar, so that the metering of fodder may be adapted to the conditions of the relevant animal. In addition, a registration may be conducted of the number of times that and the moments when the animal visits the milking parlour, the temperature and other data relating to the milk, etc.

The embodiment shown should be considered as such and only serves as an explanation of the invention which should not be considered as being restricted to this embodiment.

## Claims

1. An implement for automatically milking animals, such as cows, comprising a milking parlour and a milking machine (14) with at least one milking unit (33) including a single teat cup, and a control apparatus for automatically connecting the teat cup of said milking unit (33) to a teat of an animal's udder, **characterized in that** the milking unit (33) comprises means (16) for cleaning the teat (17), said means (16) being provided with a catching part (19), said milking unit being movable in the vertical direction to be connected to the teat (17) of the animal so that it is brought into a position in which the catching part (19) is contiguous with the udder, wherein in this position the teat cup is pre-positioned in alignment with the teat (17) but not yet connected to the teat (17), whereby together with the pre-positioning of the teat cup relative to the teat (17) also the cleaning means (16) is brought into the cleaning position, said cleaning means (16) being activated by the control apparatus when the milking unit (33) is in the said position, the teat cup being movable upwardly relative to the means (16) for cleaning the teat (17).

2. An implement as claimed in claim 1, characterized in that a cleaning liquid or air may flow through a milking tube (24), through a cleaning tube (25) and through an inner part of the milking unit (33) around a teat (17).

3. An implement as claimed in claim 2, characterized in that the cleaning liquid or air may be supplied through the relevant milking tube (24) into said inner part of the milking unit (33).

4. An implement as claimed in claim 2 or 3, characterized in that the cleaning liquid or air may be supplied to the inner part of the milking unit (33) through the milk tube (24) debouching into a lower part of the milking unit (33), while said liquid or air may be discharged from said inner part through the cleaning tube (25) debouching into an upper part of the milking unit (33).

5. An implement as claimed in any one of the preceding claims, characterized in that the milking unit (33) comprises a cleaning device (16) in the form of a tubular part surrounding a teat (17) and through which the cleaning liquid passes, and a teat cup (15) movable in height relative to said cleaning device (16), which relative movement allows the teat cup (15) to be separated from the teat (17) during the cleaning operation.

6. An implement as claimed in claim 5, characterized in that the catching part comprises a flexible, conical catching device (19) for the teat (17).

7. An implement as claimed in claim 5 or 6, characterized in that the cleaning device (16) comprises a rotatable brush (20 to 23).

8. An implement as claimed in claim 7, characterized in that the brush (20 to 23) is positioned substantially symmetrically around the centre line of a relevant teat cup (15).

9. An implement as claimed in claim 7 or 8, characterized in that the brush (20 to 23) is of an annular design having inwardly directed hairs (23), it being possible for the brush to be positioned around a teat (17).

10. An implement as claimed in claim 9, characterized in that the brush (20 to 23) includes a bearing at its outer circumference and that the hairs (23) of the brush (20 to 23) are directed substantially towards the centre line of the brush (20 to 23), but do not reach as far as said centre line.

## Patentansprüche

1. Gerät zum automatischen Melken von Tieren, beispielsweise von Kühen, das einen Melkstand und eine Melkmaschine (14) mit mindestens einer einen einzelnen Zitzenbecher aufweisenden Melkeinheit (33) sowie eine Steuereinrichtung zum automatischen Anschließen des Zitzenbechers der Melkeinheit (33) an eine Zitze eines Tiereuters aufweist,
dadurch gekennzeichnet, daß die Melkeinheit (33) eine Vorrichtung (16) zum Reinigen der Zitze (17) aufweist, wobei die Vorrichtung (16) mit einem Adapter (19) versehen ist, wobei die Melkeinheit zum Anschluß an die Zitze (17) des Tieres in vertikaler Richtung derart bewegbar ist, daß sie in eine Position gelangt, in der der Adapter (19) am Euter anliegt, wobei der Zitzenbecher in dieser Position derart voreingestellt ist, daß er mit der Zitze (17) fluchtet, aber noch nicht an die Zitze (17) angeschlossen ist, wobei zusammen mit der Voreinstellung des Zitzenbechers relativ zur Zitze (17) auch die Reinigungsvorrichtung (16) in die Reinigungsposition bewegt wird, wobei die Reinigungsvorrichtung (16) von der Steuereinrichtung aktiviert wird, wenn sich die Melkeinheit (33) in der genannten Position befindet, wobei der Zitzenbecher relativ zur Vorrichtung (16) zum Reinigen der Zitze (17) nach oben bewegbar ist.

2. Gerät nach Anspruch 1,
dadurch gekennzeichnet, daß eine Reinigungsflüssigkeit oder Luft durch eine Melkleitung (24), durch eine Reinigungsleitung (25) und durch einen Innenteil der Melkeinheit (33) hindurch die Zitze (17) umströmen kann.

3. Gerät nach Anspruch 2,
dadurch gekennzeichnet, daß die Reinigungsflüssigkeit oder Luft durch die betreffende Melkleitung (24) in den Innenteil der Melkeinheit (33) zuführbar ist.

4. Gerät nach Anspruch 2 oder 3,
dadurch gekennzeichnet, daß die Reinigungsflüssigkeit oder Luft dem Innenteil der Melkeinheit (33) durch die Melkleitung (24) hindurch zuführbar ist, die in einen unteren Teil der Melkeinheit (33) mündet, wobei die Flüssigkeit oder Luft aus dem Innenteil über die Reinigungsleitung (25) abströmen kann, die in einen oberen Teil der Melkeinheit (33) mündet.

5. Gerät nach einem der vorhergehenden Ansprüche,
dadurch gekennzeichnet, daß die Melkeinheit (33) eine Reinigungsvorrichtung (16) aufweist, die als rohrförmiges Teil eine Zitze (17) umschließt, und die von der Reinigungsflüssigkeit durchströmt wird, sowie einen relativ zur Reinigungsvorrichtung (16) höhenbewegbaren Zitzenbecher (15), so daß durch diese relative Bewegung der Zitzenbecher (15) während des Reinigungsvorganges von der Zitze (17) entfernt werden kann.

6. Gerät nach Anspruch 5,
dadurch gekennzeichnet, daß der Adapter durch einen flexiblen konischen Adapter (19) für die Zitze (17) gebildet ist.

7. Gerät nach einem der Ansprüche 5 oder 6,
dadurch gekennzeichnet, daß die Reinigungsvorrichtung (16) eine rotierende Bürste (20 bis 23) aufweist.

8. Gerät nach Anspruch 7,
dadurch gekennzeichnet, daß die Bürste (20 bis 23) im wesentlichen koaxial zur Mittellinie eines betreffenden Zitzenbechers (15) angeordnet ist.

9. Gerät nach einem der Ansprüche 7 oder 8,
dadurch gekennzeichnet, daß die Bürste (20 bis 23) ringförmig ausgebildet ist und nach innen gerichtete Borsten (23) aufweist, so daß die Bürste in einer die Zitze (17) umgebenden Lage zu positionieren ist.

10. Gerät nach Anspruch 9,
dadurch gekennzeichnet, daß die Bürste (20 bis 23) an ihrer Außenseite von einem Lager umgeben ist, und daß die Borsten (23) der Bürste (20 bis 23) im wesentlichen auf die Mittellinie der Bürste (20 bis 23) ausgerichtet sind, ohne jedoch an diese Mittellinie heranzureichen.

## Revendications

1. Machine pour traire automatiquement des animaux, tels que des vaches, comprenant une stalle de traite et une machine à traire (14) avec au moins une unité trayeuse (33) comportant un unique godet de traite, et un appareil de commande pour relier automatiquement le godet de traite de ladite unité trayeuse (33) à un trayon du pis de l'animal, caractérisée en ce que l'unité trayeuse (33) comprend des moyens (16) pour nettoyer le trayon (17), lesdits moyens (16) étant dotés d'une pièce de préhension (19), ladite unité trayeuse étant mobile dans le sens vertical pour être reliée au trayon (17) de l'animal, de sorte qu'elle soit amenée dans une position dans laquelle la pièce de préhension (19) est contigue au pis, le godet de traite étant, dans cette position, pré-positionné en alignement avec le trayon (17), mais pas encore relié au trayon (17), grâce à quoi, en même temps que s'effectue le prépositionnement du godet de traite par rapport au trayon (17), les moyens de nettoyage (16) sont aussi amenés dans la position de nettoyage, lesdits moyens de nettoyage (16) étant mis en action par l'appareil de commande lorsque l'unité trayeuse (33) est dans ladite position, le godet de traite étant mobile vers le haut par rapport aux moyens (16) de nettoyage du trayon (17).

2. Machine selon la revendication 1, caractérisée en ce qu'un liquide de nettoyage ou de l'air peut circuler à travers un tube de traite (24), à travers un tube de nettoyage et à travers une partie intérieure de l'unité trayeuse (33) autour d'un trayon (17).

3. Machine selon la revendication 1, caractérisée en ce que le liquide de nettoyage ou l'air peut être apporté à travers le tube de traite (24) correspondant dans ladite partie intérieure de l'unité trayeuse (33).

4. Machine selon la revendications 2 ou 3, caractérisée en ce que le liquide de nettoyage ou l'air peut être apporté à la partie intérieure de l'unité trayeuse (33) à travers le tube à lait (24) débouchant dans une partie inférieure de l'unité trayeuse (33), tandis que ledit liquide ou air peut être évacué de ladite partie intérieure à travers le tube de nettoyage (25) débouchant dans une partie supérieure de l'unité de traite (33).

5. Machine selon l'une quelconque des revendications précédentes, caractérisée en ce que l'unité de traite (33) comprend un dispositif de nettoyage (16) sous la forme d'une pièce tubulaire entourant un trayon (17) et à travers laquelle passe le liquide de nettoyage, et un godet de traite (15) mobile en hauteur par rapport audit dispositif de nettoyage (16), ce mouvement relatif permettant au godet de traite (15) d'être séparé du trayon (17) pendant l'opération de nettoyage.

6. Machine selon la revendication 5, caractérisée en ce que la pièce de préhension comprend un dispositif flexible conique (19) pour attraper le trayon (17).

7. Machine selon la revendication 5 ou 6, caractérisée en ce que le dispositif de nettoyage (16) comprend une brosse rotative (20 à 23).

8. Machine selon la revendication 7, caractérisée en ce que la brosse (20 à 23) est positionnée de manière sensiblement symétrique autour de l'axe d'un godet de traite (15) correspondant.

9. Machine selon la revendication 7 ou 8, caractérisée en ce que la brosse (20 à 23) a un dessin annulaire ayant des poils (23) dirigés vers l'intérieur, la brosse pouvant être positionnée autour d'un trayon (17).

10. Machine selon la revendication 9, caractérisée en ce que la brosse (20 à 23) comprend un roulement sur sa circonférence extérieure et en ce que les poils (23) de la brosse (20 à 23) sont dirigés sensiblement vers l'axe de la brosse (20 à 23), mais ne s'étendent pas jusqu'audit axe.
